# EUROPÄISCHE PATENTSCHRIFT

(11) **EP 0 515 798 B1**
(45) Veröffentlichungstag und Bekanntmachung des Hinweises auf die Patenterteilung: **28.12.1994**
(21) Anmeldenummer: 92105519.0
(22) Anmeldetag: 31.03.1992
(51) Int. Cl.: B23Q 3/155

(54) **Magazin für Werkzeuge und/oder Werkstücke mit Wechselvorrichtung**
Magazine for tools and/or workpieces with changer device
Magazine pour outils et/ou pièces avec changeur

(30) Priorität: 17.05.1991 DE 4116091
(43) Veröffentlichungstag der Anmeldung: 02.12.1992
(73) Patentinhaber: HIRSCHMANN GmbH, D-78737 Fluorn-Winzeln (DE)
(72) Erfinder: Schneider, Manfred, W-7215 Bösingen (DE)
(74) Vertreter: Patentanwälte Westphal, Buchner, Mussgnug Neunert, Göhring

(56) Entgegenhaltungen:
- EP-A- 0 128 487
- EP-A- 0 276 391
- EP-A- 0 319 914
- NL-A- 7 709 021
- US-A- 3 339 273
- US-A- 3 355 798
- WERKSTATT UND BETRIEB Bd. 120, Nr. 12, 31. Dezember 1987, Seiten 998 - 1002; SCHULZE DIECKHOFF: 'UMFANGREICHE KOMBINATIONMÖGLICHKEITEN FLEXIBLER FERTIGUNGSEINRICHTUNGEN'
- PATENT ABSTRACTS OF JAPAN vol. 6, no. 48 (M-119)(926) 27. März 1982

## Beschreibung

Die Erfindung betrifft ein Magazin für Werkzeuge und/oder Werkstücke mit einer Wechselvorrichtung, wie dieses mit dem Oberbegriff des Anspruchs 1 definiert ist.

Mit derartigen Magazinen werden Werkzeuge bzw. Werkstücke für automatisch zu beschickende Bearbeitungsmaschinen bereitgehalten. Mit Vorteil können solche Werkzeug- bzw. Werkstückmagazine bei Funkenerosionsmaschinen eingesetzt werden, bei welchen häufig nacheinander eine ganze Anzahl von Bearbeitungselektroden eingesetzt werden muß.

In der EP 0 132 599 A1 ist ein solches Magazin beschrieben. Bei diesem Werkzeugmagazin sind zur Aufnahme der Werkzeuge bzw. Werkstücke auf einer Welle mehrere scheibenförmige Werkzeugträger gelagert, in welche peripher Werkzeuge eingehängt sind. Zur Entnahme bzw. Magazinierung eines Werkzeuges bzw. eines Werkstückes muß dieses Magazinteil in eine geeignete Position gedreht werden, worauf mittels einer Wechselvorrichtung das Werkzeug oder Werkstück entnommen bzw. abgelegt wird. Die Wechselvorrichtung besteht hierbei aus einer verdrehbaren vertikalen Säule, auf welcher axial verschiebbar ein Schlitten gelagert ist, der seinerseits einen verschwenkbar gelagerten Transportarm mit Greifvorrichtung trägt.

Ein derartiges Magazin hat zweifelsohne eine sehr große Kapazität. Andererseits ist die Handhabung eines mit einer Vielzahl von Werkzeugen bzw. Werkstücken beladenen Magazinteiles, das zur Entnahme bzw. Magazinierung eines Werkzeuges bzw. Werkstückes gedreht werden muß, wegen der erheblichen Masse nicht problemlos. Auch ist die Wechselvorrichtung mit dem L-förmig ausgebildeten verschwenkbar gelagerten Transportarm hinsichtlich Aufbau und Steuerung kompliziert.

Ein relativ einfach konstruiertes Magazin ist aus der EP 0 319 914 A1 bekannt geworden, von dem die vorliegende Erfindung ausgeht. Es weist mehrere, turmartig übereinander angeordnete Trägereinheiten auf, die in einem Trägergestell angeordnet sind. Dem Zentrum des Magazins ist eine Drehsäule zuordenbar, an welcher axial verschiebbar ein Schlitten mit einem horizontal und durch eine am Magazin vorhandene Öffnung ausfahrbarer Teleskoparm vorgesehen ist, dessen freies Ende mit einem Greifer ausgestattet ist. Die Säule, Schlitten, Teleskoparm und Greifer sind mittels programmierbar gesteuerter Antriebe betätigbar. Korrespondierend hierzu liegen die Aufnahmen der Trägereinheiten im wesentlichen auf in bezug auf das Zentrum und damit der Drehsäule konzentrischen Kreisbögen. Damit gelingt es, die Zugriffszeiten der Wechselvorrichtung zu den einzelnen Aufnahmen kurz zu halten.

Ein derartiges Magazin bietet zwar eine sehr große Kapazität bei vergleichsweise einfachem, konstruktivem Aufbau, bedingt jedoch im Falle einer erforderlichen Magazinbestückung erhebliche Stillstandzeiten der Bearbeitungsmaschinen. Aus diesem Grund ist das Magazin selbst mit einer Transportvorrichtung versehen, mit welcher das Magazin der ortsfest angebrachten Wechselvorrichtung über Schienen zuführbar ist. Damit ist es möglich, die Bestückung an einem separaten Ort vorzunehmen bzw. ein bereits vorbestücktes Magazin komplett auszuwechseln. Dies führt allerdings zu einem nicht unerheblichen Aufwand, der zur Realisierung des Transportsystems nötig ist. Auch ist in vielen Fällen eine schlechte Zugänglichkeit der Aufnahmen gegeben, da diese sich im Inneren des Magazins befinden.

Der vorliegenden Erfindung liegt darum die Aufgabe zugrunde, das Magazin mit der Wechselvorrichtung so auszubilden, daß bei großer Magazinkapazität kurze Zugriffszeiten erzielt werden, wobei sowohl das Magazin als auch die Wechselvorrichtung mit ihrer programmierbaren Steuerung möglichst einfach ausgebildet sein sollen und gleichzeitig die durch die Bestückung des Magazins bedingten Stillstandzeiten minimiert bzw. vollständig vermeidet.

Gelöst wird diese Aufgabe mit den nach Anspruch 1 gekennzeichneten Merkmalen.

Nach der Grundidee gemäß der Erfindung ist als Magazin eine aus einzelnen Paneelen gebildete, ortsfeste Kabine vorgesehen, in deren Zentrum die Drehsäule mit der Wechselvorrichtung angeordnet ist. Jeder Speicherplatz des Magazins kann damit durch eine einfache Drehbewegung und durch radialen Vorschub des horizontal ausfahrbaren Teleskoparmes der Wechselvorrichtung angefahren werden. Die Paneele sind nach außen aufklappbar, so daß sie in einfacher und bequemer Weise rasch bestückt werden können. Sie weist wenigstens ein Fenster auf, durch welches der Teleskoparm ausgefahren werden kann, um ein Werkstück oder Werkzeug einem externen Arbeitsplatz zuführen zu können.

Ein besonders einfacher Bewegungsablauf und damit eine einfache Steuerung ergeben sich für die Wechselvorrichtung, wenn, wie mit Anspruch 2 vorgeschlagen, die Werkzeug- bzw. Werkstückaufnahmen der Träger aus radial verlaufenden und in Richtung auf die Drehsäule offenen Einschnitten bestehen. In diese Einschnitte können die Werkzeuge bzw. Werkstücke eingehängt werden, so daß sie durch einfache Transversalbewegung des mit einem Greifer ausgestatteten Teleskoparmes zu entnehmen bzw. zu magazinieren sind.

Anstelle von Einschnitten können, wie mit Anspruch 3 vorgeschlagen, an den Werkzeug- bzw. Werkstückträgern auch etwa radial in Richtung auf die Drehsäule abstehende Bolzen vorgesehen sein, auf welche die mit Bolzenaufnahmen ausgestatteten Werkzeuge und/oder Werkstücke aufsteckbar sind.

Je nach Einsatzzweck können die Paneele der Kabine U-förmig (Anspruch 4) oder kreisförmig (Anspruch 5) angeordnet sein, wobei ein oder mehrere Fenster antelle von Paneelen, welche mit den Werkzeug- bzw. Werkstückträgern bestückt sind, vorzusehen sind. Die Anzahl der Fenster richtet sich nach der Anzahl der zu bedienenden Arbeitsplätze. So ist es möglich, mit demselben Magazin mehrere, vorzugsweise zwei, verschiedene Arbeitsplätze mit Werkzeugen bzw. Werkstücken aus dem Magazin zu beschicken.

Die Kapazität des Magazins läßt sich vervielfachen, wenn gemäß Anspruch 6 mehrere Werkzeug- bzw. Werkstückträger etagenartig übereinander an den Innenseiten der Paneele angeordnet sind.

Diese Paneele sind, wie schon eingangs erwähnt und genauer mit Anspruch 7 angegeben, als einseitig gelagerte Schwenktüren ausgebildet.

Falls auch deren Kapazität nicht ausreichen sollte, können die Paneele nach dem Vorschlag gemäß Anspruch 8 beidseitig mit Werkzeug- bzw. Werkstückträgern versehen sein. In diesem Fall sind die Paneele mittig gelagert, so daß durch eine 180°-Drehung die zunächst außen gelegene Fläche nach innen verschwenkbar ist. Dies ermöglicht auch die Neubestückung des Magazins ohne Arbeitsunterbrechung.

In Weiterbildung dieses Vorschlages sind als Paneele nach den Ansprüchen 9 bis 11 symmetrische Polygonzylinder vorgesehen, deren ebene Außenflächen mit Werkzeug- bzw. Werkstückträgern versehen sind. Diese Polygonzylinder, die gleichfalls mittig drehbar gelagert sind, können beispielsweise einen dreieckigen oder einen rechteckigen, vorzugsweise quadratischen Grundriß besitzen (vgl. Ansprüche 10 und 11).

Gegenüber bekannten Magazinen bietet die erfindungsgemäße Konstruktion folgende Vorteile.
1. Die bei der Entnahme von Werkzeugen und Werkstücken zu bewegenden Massen sind relativ klein, so daß sich kurze Zugriffszeiten ergeben.
2. Trotz großer Kapazität hat das in Form einer Kabine ausgebildete Magazin einen relativ geringen Platzbedarf.
3. Die aufklappbaren Paneele, an welchen die Magazinleisten angebracht sind, ermöglichen eine einfache Bestückung des Magazins ggf. ohne Abschaltung der Wechselvorrichtung.
4. Die Bewegungsabläufe der Wechselvorrichtung sind einfach, was sich günstig auf Steuerung und Herstellungskosten auswirkt.
5. Je nach Anwendungszweck können einzelne Paneele zur Bildung von Fenstern weggelassen werden, so daß aus demselben Magazin mehrere Maschinen oder dergleichen Arbeitsplätze mit Werkzeugen bzw. Werkstücken beschickt werden können.

Der Gegenstand der Erfindung ist nachstehend anhand verschiedener Ausführungsbeispiele, die in den Zeichnungen schematisch dargestellt sind, im einzelnen erläutert. In den Zeichnungen zeigen
- Figur 1: aufgeschnittene Seitenansicht eines erfindungsgemäßen Magazins mit Wechselvorrichtung nach einem ersten Ausführungsbeispiel, wobei der Teleskoparm mit Greifer in drei verschiedenen Arbeitspositionen dargestellt ist,
- Figur 2: Aufsicht auf die in Figur 1 dargestellte Anordnung jedoch ohne Deckplatte,
- Figur 3: eine der Figur 2 entsprechende Aufsicht eines erfindungsgemäßen Magazins nach einem zweiten Ausführungsbeispiel,
- Figur 4: eine der Aufsicht gemäß Figur 2 entsprechende Aufsicht eines erfindungsgemäßen Magazins nach einem dritten Ausführungsbeispiel,
- Figur 5: Seitenansicht eines Kabinenteils mit geschlossener und geöffneter Schwenktür,
- Figur 6: Aufsicht auf das in Figur 5 dargestellte Kabinenteil ohne Deckplatte, abgebrochen dargestellt, und
- Figur 7: eine der Figur 2 entsprechende Aufsicht eines erfindungsgemäßen Magazins, bei welchem zum Zwecke der Veranschaulichung Schwenktüren mit Magazinleisten in vier verschiedenen Abwandlungen dargestellt sind.

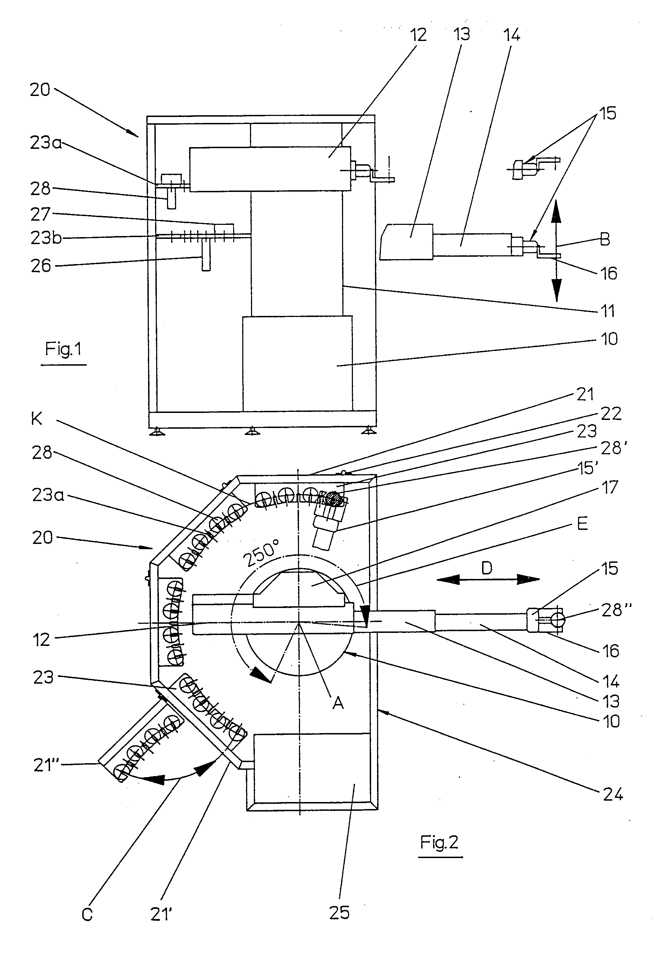

Der grundsätzliche Aufbau des erfindungsgemäß gestalteten Werkzeug- bzw. Werkstückmagazins ist mit den beiden Figuren 1 und 2 veranschaulicht. Bei dem in den weiteren Figuren dargestellten Ausführungsbeispielen sind identische Teile mit den gleichen Ziffern und einander entsprechende Teile mit den entsprechenden Ziffern der Zehnderdekade gekennzeichnet.

Das eigentliche Magazin besteht im wesentlichen aus einem Gehäuse bzw. einer Kabine 20, die durch in Form von Schwenktüren 21 ausgebildeten Paneelen gebildet ist. Diese Schwenktüren 21 sind um vertikale Lager 22 verschwenkbar und damit aufklappbar. An der Innenseite der Schwenktüren befinden sich Magazinleisten 23 mit radial verlaufenden und nach innen offenen schlitzförmigen Aufnahmen 23a. In diese Aufnahmen sind entnehmbar Werkzeuge 26, z.B. im Falle von Funkenerosionsmaschinen Elektroden, Paletten 27 für Werkstücke oder mit Haltern versehene Elektroden 28 eingehängt. Die Aufsicht in Figur 2 läßt erkennen, daß die Werkzeug- bzw. Werkstückaufnahmen 21a auf einem horizontal verlaufenden Kreisbogen K angeordnet sind, dessen Mittelpunkt auf der Achse der Drehsäule 10 gelegen ist. An dieser zentralen Drehsäule 10, welcher ein Antrieb 11 zugeordnet ist, ist axial verschiebbar ein Schlitten 12 gelagert. Der Schlitten seinerseits trägt in Richtung des Doppelpfeiles D einen radial ausfahrbaren Teleskoparm 13, 14, welcher an seinem freien Ende einen Greifer 15 mit Greiferbacken 16 trägt. Für den Vorschub der Teleskoparme 13, 14 sorgt ein am Schlitten angeordneter Antrieb 17.

Mittels der schematisch dargestellten Antriebe kann die Säule 10 über den Winkelbereich E, der hier mit 250° angegegeben ist, verschwenkt, der Schlitten 12 in Richtung des Doppelpfeiles B in der Höhe verfahren, der Teleskoparm 13 und 14 in Richtung des Doppelpfeiles D transversal ein- und ausgefahren und der Greifer 15 um die Achse des Teleskoparmes 13 und 14 aus einer oberen in eine untere Stellung verdreht werden, wie mit den beiden Darstellungen rechts in Figur 1 angedeutet ist. Gesteuert werden diese Bewegungen mittels einer programmierbaren Steuereinheit 25 entsprechend dem gewünschten oder erforderlichen Arbeitsablauf. So kann, wie mit dem Greifer 15' in Figur 2 angedeutet, das Werkzeug 28' durch transversale Rückzugbewegung aus der Magazinleiste 23 entnommen und nach Verschwenken in die in Figur 2 ausgezogene Position mittels des Teleskoparmes 13 und 14, der das Fenster 24 der Kabine 20 durchsetzt, transversal zu einem Arbeitsplatz, z.B. zu einer nicht dargestellten Funkenerosionsmaschine, vorgeschoben werden, worauf der Greifer 15 in Richtung B an den Spanner der Maschine zur Entnahme des Werkzeuges 28'' herangefahren wird.

Zur Bestückung des Magazins kann eine der Schwenktüren, beispielsweise die Schwenktür 21' in die Position 21'', aufgeklappt werden, wie mit dem Doppelpfeil C angedeutet ist, um bei geöffneter Tür eine neue Werkzeug- bzw. Werkstückbestückung vorzunehmen.

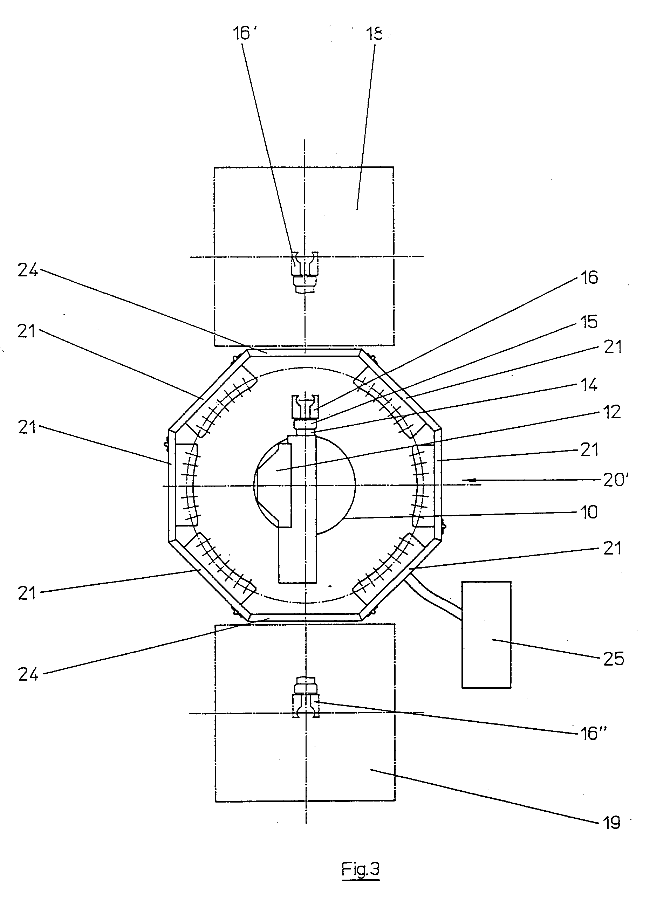

Das Magazin nach seiner zweiten Ausführungsform gemäß Figur 3, bei welchem die als Schwenktüren ausgebildeten Paneele 21 kreisförmig um die Drehsäule 10 gruppiert sind, ermöglicht die Bedienung zweier Arbeitsplätze 18 und 19, die in diesem Fall angrenzend an die Fenster 24 des Magazins 20' diametral zueinander angeordnet sind. So kann der an dem Teleskoparm 17, 14 vorgesehene Greifer 15 mit den Greiferbacken 16 je nach Position der Drehsäule 10 in die mit 16' bzw. 16'' angedeuteten Positionen verfahren werden.

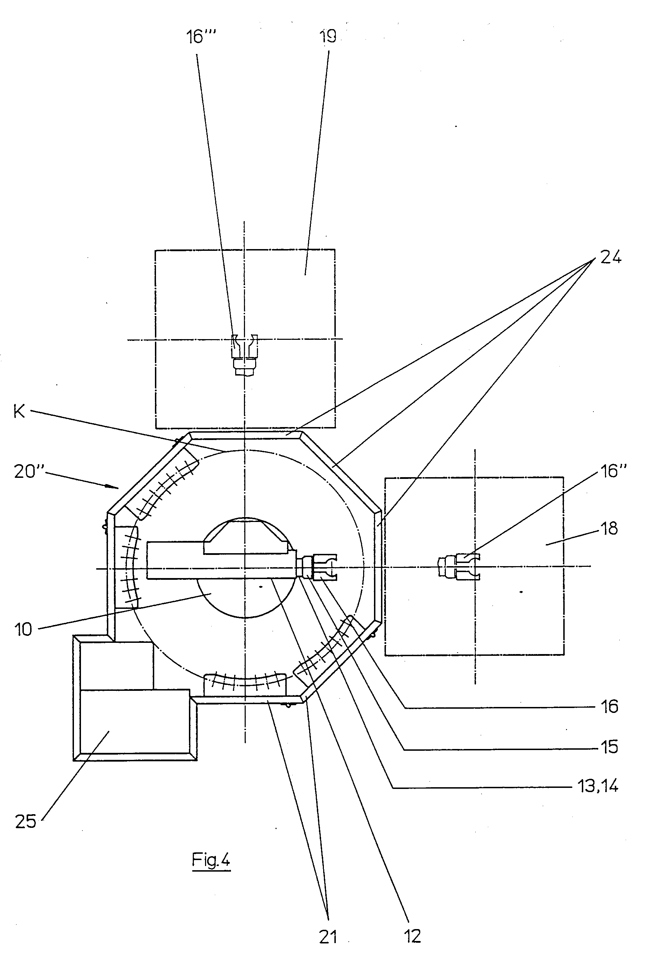

Auch bei der Ausführungsform gemäß Figur 4 lassen sich zwei in diesem Fall winklig zueinander angeordnete Arbeitsplätze 18 und 19 mittels desselben Magazins bzw. derselben Wechselvorrichtung bedienen, deren Greifer mit Greiferbacken in Abhängigkeit der Positionierung der Drehsäule 10 in die mit 16'' und 16''' symmolisierten Stellungen ausgefahren werden kann. Auch bei dieser Anordnung ist die Kabine 20'' im Grundriß etwa kreisförmig, genauer gesagt in Form eines Oktagons, gestaltet. Auf einem Kreis K sind die nur symbolisch angedeuteten Werkzeug- bzw. Werkstückaufnahmen angeordnet, so daß durch sehr einfache Schwenk- und Transversalbewegungen des Teleskoparmes 13, 14 Werkzeug- und/oder Werkstückentnahme bzw. -abgabe ausgeführt werden können.

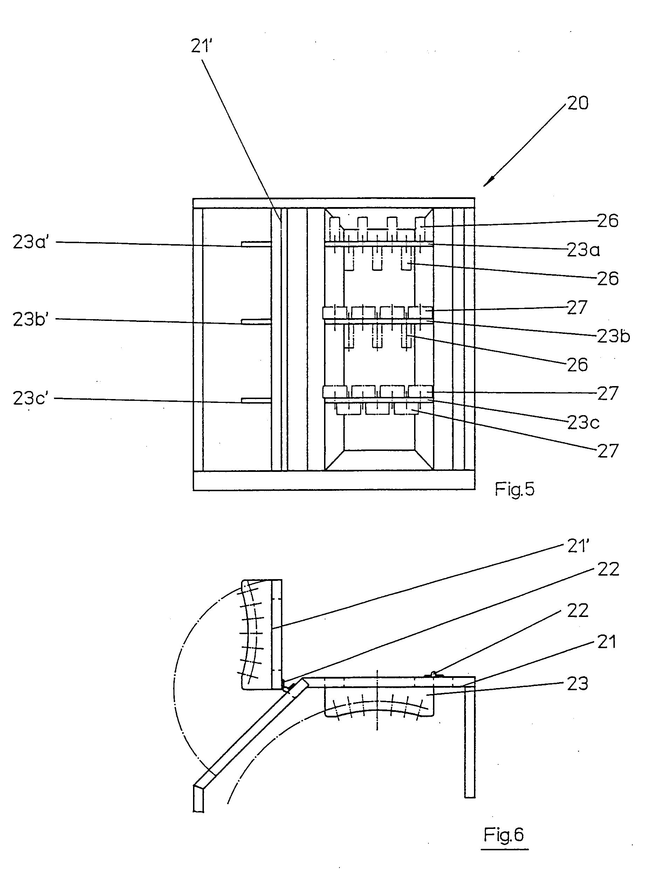

Mit den Figuren 5 und 6 sind unterschiedliche Lagerungen von Werkzeugen bzw. Werkstücken veranschaulicht. An der in Figur 5 oberen Magazinleiste 23a sind teils stehend teils hängend Werkzeugelektroden 26 positioniert. An der mittleren Magazinleiste 23 sind auf der Oberseite Werkstückpaletten 27 und an der Unterseite Werkzeugelektroden 26 magaziniert, während die untere Magazinleiste 23 der etagenförmig übereinander angeordneten Magazinleisten stehend und hängend Werkstückpaletten 27 trägt.

Zum Zwecke der Neubestückung oder zum Austausch von Werkzeugen bzw. Werkstücken braucht die Schwenktür 21 lediglich in die mit 21' bezeichnete Position aufgeklappt zu werden, wie die Aufsicht gemäß Figur 6 deutlich macht.

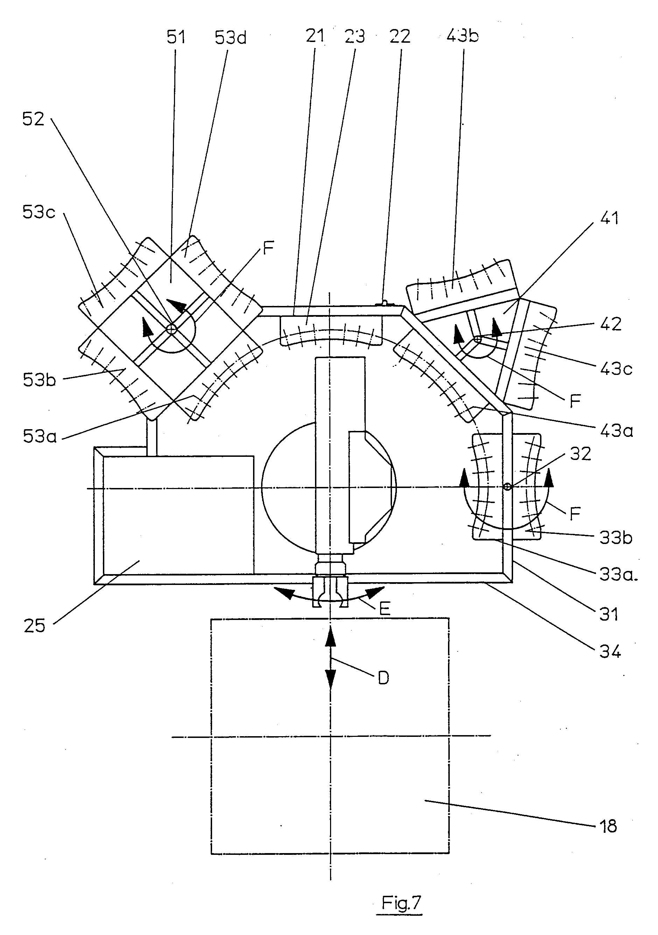

Sollte die Kapazität eines Magazins mit in Form von Schwenktüren ausgebildeten Paneelen, wie diese bei den Ausführungsbeispielen nach den Figuren 1 bis 6 gezeigt sind, nicht ausreichen, bieten sich weitere Gestaltungsmöglichkeiten an, die mit der Aufsicht gemäß Figur 7 exemplarisch zusammengetragen und schematisch dargestellt sind.

Anstelle des in Form einer einfachen Schwenktür 21 ausgebildeten Paneels kann eine um das zentrale Türlager 32 verdrehbare Doppeltür 31 vorgesehen sein, welche auf beiden Seiten mit Magazinleisten 33a und 33b bestückt ist. Durch Verdrehen der Doppeltür 31 in Richtung des Doppelpfeiles F können die Magazinleisten 33a und 33b nacheinander in den Zugriffsbereich der Beschickungseinheit gebracht werden.

Zur weiteren Kapazitätserhöhung sind in Form von symmetrischen Polygonzylindern ausgebildete Paneele vorgesehen, z.B. Polygonzylinder 41 mit dreieckigem Grundriß oder Polygonzylinder mit quadratischem Grundriß 51. Die Außenseite dieser Zylinder sind wiederum mit Magazinleisten 43a, b, c bzw. 53a, b, c, d bestückt. Diese Magazinleisten werden durch Verdrehen der Paneele um das zentrale Lager 42 bzw. 52 in Arbeits- bzw. Bestückungsposition gebracht.

## Patentansprüche

1. Magazin für Werkzeuge und/oder Werkstücke, welche in Aufnahmen (23a) von sich horizontal erstreckenden Trägern (23, 33, 43, 53) des Magazins hängend und/oder stehend angeordnet sind, mit einer Wechselvorrichtung zur Entnahme und Magazinierung der Werkzeuge und/oder Werkstücke, bestehend aus einer vertikalen, im Zentrum des Magazins angeordneten Drehsäule (10), an welcher axial verschiebbar ein Schlitten (12) mit einem horizontal und durch eine am Magazin angebrachte Öffnung ausfahrbaren Teleskoparm (13, 14) angeordnet ist, dessen freies Ende mit einem Greifer (15) ausgestattet ist, wobei Drehsäule, Schlitten, Teleskoparm und gegebenenfalls Greifer mittels progammierbar gesteuerter Antriebe (11, 17) betätigbar sind und die Aufnahmen der Träger im wesentlichen auf einem zur Drehsäule konzentrischen Kreisbogen (K) liegen, dadurch gekennzeichnet, daß das Magazin in Form einer Kabine (20, 20', 20'') mit nach außen aufklappbaren Paneelen (21, 31, 41, 51) ausgebildet ist und die Werkzeug- bzw. Werkstückträger (23, 33, 43, 53) an den innerhalb der Kabine (20, 20', 20'') gelegenen Flächen der Paneele (21, 31, 41, 51) vorgesehen sind.

2. Magazin nach Anspruch 1, dadurch gekennzeichnet, daß die Aufnahmen der Träger (23) radial verlaufende, in Richtung auf die Drehsäule (10) offene Einschnitte (z.B. 23a) sind, in welche die Werkzeuge und/oder Werkstücke (27) einhängbar sind.

3. Magazin nach Anspruch 1, dadurch gekennzeichnet, daß die Aufnahmen aus radial in Richtung auf die Drehsäule abstehende Bolzen bestehen, auf welche die mit Bolzenaufnahmen ausgestatteten Werkzeuge und/oder Werkstücke aufsteckbar sind.

4. Magazin nach Anspruch 1, 2 oder 3, dadurch gekennzeichnet, daß die Paneele der Kabine (20) in bezug auf die Drehsäule (10) U-förmig angeordnet sind und das Fenster (24, 34) auf der offenen Seite des U vorgesehen ist (Figur 2, Figur 7).

5. Magazin nach Anspruch 1, 2 oder 3, dadurch gekennzeichnet, daß die Paneele der Kabine (20', 20'') in bezug auf die Drehsäule (10) kreisförmig angeordnet und anstelle zweier Paneele einander gegenüberliegend (Figur 3) oder zueinander benachbart (Figur 4) zur Beschickung zweier Arbeitsplätze (18, 19) Fenster (24) vorgesehen sind.

6. Magazin nach einem der Ansprüche 1 bis 5, dadurch gekennzeichnet, daß an den Innenseiten der Paneele (21, 31, 41, 51) mehrere Träger (23a, b, c) etagenartig übereinander angeordnet sind.

7. Magazin nach einem der Ansprüche 1 bis 6, dadurch gekennzeichnet, daß als Paneele einseitig gelagerte Schwenktüren (21) vorgesehen sind, deren Innenfläche mit Werkzeug- bzw. Werkstückträgern (23a, b, c) versehen sind.

8. Magazin nach einem der Ansprüche 1 bis 6, dadurch gekennzeichnet, daß als Paneele mittig gelagerte Schwenktüren (31) vorgesehen sind, deren beide Flächen mit Werkzeug- bzw. Werkstückträgern (33a, b) versehen sind.

9. Magazin nach einem der Ansprüche 1 bis 6, dadurch gekennzeichnet, daß als Paneele mittig gelagerte, symmetrische Polygonzylinder (41, 51) vorgesehen sind, deren Außenflächen mit Werkzeug- bzw. Werkstückträgern (43a, b,c; 53a, b, c, d) versehen sind.

10. Magazin nach Anspruch 9, dadurch gekennzeichnet, daß die Polygonzylinder (41) einen dreieckigen Grundriß besitzen.

11. Magazin nach Anspruch 9, dadurch gekennzeichnet, daß die Polygonzylinder (51) einen rechteckigen Grundriß besitzen.

## Claims

1. Magazine for tools and/or workpieces which are arranged suspended and/or standing in receivers (23a) of horizontally extending carriers (23, 33, 43, 53) of the magazine, having a changer device for removing and magazining the tools and/or workpieces, comprising a vertical rotary column (10) which is arranged in the centre of the magazine and on which there is arranged axially displaceably a carriage (12) having a telescopic arm (13, 14) which is extensible horizontally and through an opening on the magazine, its free end being equipped with a gripper (15), wherein the rotary column, the carriage, the telescopic arm and where appropriate the gripper are actuable by means of programmably controlled drives (11, 17) and the receivers of the carriers lie substantially in an arc (K) concentric with respect to the rotary column, characterized in that the magazine is constructed in the form of a cubicle (20, 20', 20'') having panels (21, 31, 41, 51) which can be folded open outwards and the tool or workpiece carriers (23, 33, 43, 53) are provided on the faces of the panels (21, 31, 41, 51) inside the cubicle (20, 20', 20'').

2. Magazine according to Claim 1, characterized in that the receivers of the carriers (23) are radial incisions (e.g. 23a) which are open in the direction of the rotary column (10) and in which the tools and/or workpieces (27) can be suspended.

3. Magazine according to Claim 1, characterized in that the receivers comprise pegs which project radially in the direction of the rotary column and onto which the tools and/or workpieces, equipped with peg receivers, can be pushed.

4. Magazine according to Claim 1, 2 or 3, characterized in that the panels of the cubicle (20) are arranged in the form of a U with respect to the rotary column (10) and the window (24, 34) is provided on the open side of the U (Figure 2, Figure 7).

5. Magazine according to Claim 1, 2 or 3, characterized in that the panels of the cubicle (20', 20'') are arranged in the form of a circle with respect to the rotary column (10) and instead of two panels opposite one another (Figure 3) or adjacent one another (Figure 4) windows (24) are provided for charging two workstations (18, 19).

6. Magazine according to one of Claims 1 to 5, characterized in that a plurality of carriers (23a, b, c) are arranged one above the other in the manner of storeys.

7. Magazine according to one of Claims 1 to 6, characterized in that pivotal doors (21) which are mounted on one side are provided as the panels, the inner faces of which are provided with tools or workpiece carriers (23a, b, c).

8. Magazine according to one of Claims 1 to 6, characterized in that pivotal doors (31) which are mounted centrally are provided as the panels, both faces of which are provided with tool or workpiece carriers (33a, b).

9. Magazine according to one of Claims 1 to 6, characterized in that symmetrical polygonal cylinders (41, 51) which are mounted centrally are provided as the panels, the outer faces of which are provided with tool or workpiece carriers (43a, b, c; 53a, b, c, d).

10. Magazine according to Claim 9, characterized in that the polygonal cylinders (41) have a triangular outline.

11. Magazine according to Claim 9, characterized in that the polygonal cylinders (51) have a rectangular outline.

## Revendications

1. Magasin pour recevoir des outils et/ou des pièces d'oeuvre suspendus et/ou posés sur des réceptacles (23a) fixés à des supports s'étendant horizontalement (23, 33, 43, 53) du magasin, dans lequel :
- un dispositif d'échange servant à retirer ou à mettre en magasin les outils et/ou les pièces, est constitué d'une colonne tournante (10) située au centre du magasin et sur laquelle peut coulisser axialement un coulisseau (12) portant un bras télescopique (13, 14) horizontal pouvant passer à travers une ouverture du magasin et dont l'extrémité est équipée d'une pince (15).
- la colonne tournante, le coulisseau, le bras télescopique et éventuellement la pince peuvent être commandés par un mécanisme d'entraînement (11, 17) programmable.
- les réceptacles des supports sont disposés sensiblement sur un cercle (K), concentrique à la colonne tournante, caractérisé en ce que :
- il a la forme d'une cabine (20, 20', 20'') présentant des panneaux (21, 31, 41, 51) pouvant basculer vers l'extérieur.
- les supports (23, 33, 43, 53) des outils et/ou des pièces sont montés sur les faces des panneaux (21, 31, 41, 51) situées à l'intérieur de la cabine (20, 20', 20'').

2. Magasin selon la revendication 1, caractérisé en ce que les réceptacles des supports (23) sont des encoches radiales ouvertes en direction de la colonne tournante (10) et dans lesquelles les outils et/ou les pièces (27) peuvent être suspendus.

3. Magasin selon la revendication 1, caractérisé en ce que les réceptacles sont constitués par des broches débordantes radiales dirigées vers la colonne tournante et sur lesquelles peuvent être emmanchés les outils et/ou les pièces équipés de contre-parties correspondant aux broches de réception.

4. Magasin selon la revendication 1, 2 ou 3, caractérisé en ce que les panneaux de la cabine (20), par rapport à la colonne tournante (10) désignent un U dans la face ouverte duquel est prévue la fenêtre (24, 34) (figure 2, figure 7).

5. Magasin selon la revendication 1, 2 ou 3, caractérisé en ce que les panneaux de la cabine (20', 20'') par rapport à la colonne tournante (10) sont disposés en cercle, des fenêtres (24) servent à alimenter deux postes de travail (18, 19) prévues à la place de deux panneaux opposés (figure 4) ou les unes à côté des autres. (Figure 4).

6. Magasin selon une des revendications 1 à 5, caractérisé en ce que plusieurs supports (23a, b, c) sont disposés en étages les uns au-dessus des autres sur les faces internes des panneaux (21, 31, 41, 51).

7. Magasin selon une des revendication 1 à 6, caractérisé en ce que les panneaux sont constitués par des portes (21), pivotant autour d'un de leurs côtés et dont les faces internes sont munies de supports (23a,b,c) des outils et/ou des pièces.

8. Magasin selon une des revendications 1 à 6, caractérisé en ce que les panneaux sont constitués de portes (31) pivotant autour d'un axe médian et dont les deux faces sont munies de supports (33a,b) des outils et/ou pièces.

9. Magasin selon une des revendications 1 à 6, caractérisé en ce que les panneaux sont constitués de cylindres (41,51) polygonaux symétrique disposés autour d'un axe médian et dont les faces externes sont munies de supports (43a,b,c ; 53a,b,c,d) des outils et/ou des pièces.

10. Magasin selon la revendications 9, caractérisé en ce que les cylindres polygonaux (41) ont une base triangulaire.

11. Magasin selon la revendication 9, caractérisé en ce que les cylindres polygonaux (51) ont une base rectangulaire.
